# EUROPEAN PATENT SPECIFICATION

(11) **EP 3 323 586 B1**
(45) Date of publication and mention of the grant of the patent: **04.03.2020**
(21) Application number: 17202319.4
(22) Date of filing: 17.11.2017
(51) Int. Cl.: B29C 45/56, B22C 15/08, B22D 17/00, B22D 17/22

(54) **MOULD FOR INJECTION-COMPRESSION MOULDING**
FORMWERKZEUG ZUM SPRITZPRÄGEN
MOULE DE MOULAGE PAR INJECTION-COMPRESSION

(30) Priority: 17.11.2016 IT 201600116313
(43) Date of publication of application: 23.05.2018
(73) Proprietor: Uniteam Italia S.r.L., 30020 Quarto d'Altino Venezia (IT)
(72) Inventor: FURLAN, Mario, I-30020 Quarto d'Altino, VENEZIA (IT); CARRARO, Piertommaso, I-30020 Quarto d'Altino, VENEZIA (IT)
(74) Representative: Gualeni, Nadia

(56) References cited:
- EP-A1- 0 099 171
- EP-A1- 0 927 618
- EP-A1- 3 047 956
- WO-A1-2016/034990
- GB-A- 1 182 130

## Description

### FIELD OF APPLICATION

The present invention relates to a mould for injection-compression moulding and a relative moulding method.

### PRIOR ART

Injection-compression moulding differs from the traditional moulding process in the injection step, which takes place when the mould is open. The injection-compression process involves an initial step in which the mould has an initial opening before the injection step: this increases the volume of the cavity, which is partially filled by the molten material. The molten material is then compressed by the closing movement of the mould and the mould filling time is completed as a result. An alternative method involves filling the entire mould, and the compression step compensates only for the volumetric shrinkage of the molten material that solidifies. This is followed by the steps of cooling and extraction of the piece. In the injection-compression process, the final distribution in the mould, compaction and compensation of the shrinkage of the material occur by compression, by closing the mould through the movement of the press.

In order to ensure the required tolerances on the mould closing, particularly with regard to thermal deformations induced to the mould by the same process, it is known to use perimetral rings, interposed between the upper portion (matrix) and the lower portion (punch) of the mould.

Examples of known perimetral rings are disclosed in documents WO 2016/034990 A1, EP 0 927 618 A1 and GB 1 182 130 A.

However, this known solution also has some drawbacks:
- the pressure of the molten material can push the perimetral ring towards the outside of the mould, thus creating burrs on the piece;
- in some geometries, the construction of the perimetral ring is very expensive if not impossible since the perimetral ring must follow the geometrical features of the piece (such as wings and ribs) and in many cases, it creates (together with the matrix and punch) a triple junction point that is very difficult to form;
- the uncontrolled movement of the perimetral ring when opening the mould may damage (such as scratch) the surface of the piece.

### DISCLOSURE OF THE INVENTION

As described above, the prior art solutions have some drawbacks.

In particular, to date, no reliable and cos-effective solutions are known that ensure the correct resting and support of the perimetral ring during the injection of the material into the mould.

Moreover, to date, no perimetral ring solutions are known that allow preventing the presence of visible junction lines on the piece or on the outer edge of the piece.

Moreover, to date, no reliable and cost-effective solutions are known that allow preventing the ejection of the piece at the opening by a system that ensures both the necessary tightness of the closure and the absence of residual forces when opening the mould.

The need to solve the drawbacks cited with reference to the prior art is therefore felt.

Such a need is met by a mould according to claim 1 and by a moulding method according to claim 13.

### DESCRIPTION OF THE DRAWINGS

Further features and advantages of the present invention will appear more clearly from the following description of preferred non-limiting embodiments thereof, in which:
figures 1-6 show schematic views of steps of a moulding sequence according to the present invention;
figure 7 shows a schematic top view of a perimetral ring according to the present invention;
figure 8 shows a schematic view of the hydraulic circuit, integrated in the mould, for moving the perimetral ring;
figure 9 shows an enlargement of a detail of figure 5, in which a perimetral ring is shown, in an embodiment example according to the present invention, in the closing step (between matrix and punch) of the mould;
figures 10-11 show further embodiment examples of the perimetral ring.

Elements or parts of elements in common o the embodiments described below are referred to with the same reference numerals.

### DETAILED DESCRIPTION

With reference to the above figures, reference numeral 1 globally denotes a mould for injection compression moulding (ICM).

Mould 1 comprises a punch 2 and a matrix 3 suitable to close on the punch 2 so as to delimit with this an injection chamber 10 to contain the material to be injected. Matrix 3 and punch 2 are axially movable between them with respect to an axial direction Y-Y of opening/closing of mould 1.

As shown in the figure, mould 1 further comprises a perimetral ring 4, slidingly associated to punch 2 or matrix 3, along the axial direction Y-Y, in which the perimetral ring 4 defines, together with matrix 3 and punch 2, the profile of the injection chamber 10.

Mould 1 is characterised in that the closure between matrix 3 and punch 2 is accomplished using a perimetral ring 4 having a special shape of an interface wall with matrix 3 above, or with punch 2.

The perimetral ring 4 comprises a matrix interface profile 43 intended to engage with matrix 3, and a punch interface profile 42, intended to engage with punch 2.

Advantageously, the matrix interface profile 43 is equipped with a particular geometry suitable to generate a compression force of ring 4 towards the inside of mould 1.

The matrix interface profile 43 is convex, preferably convex polygonal.

The matrix interface profile 43 comprises an inclined upper thrust wall 443, on which an inclined plane 34 associated with matrix 3 is engaged.

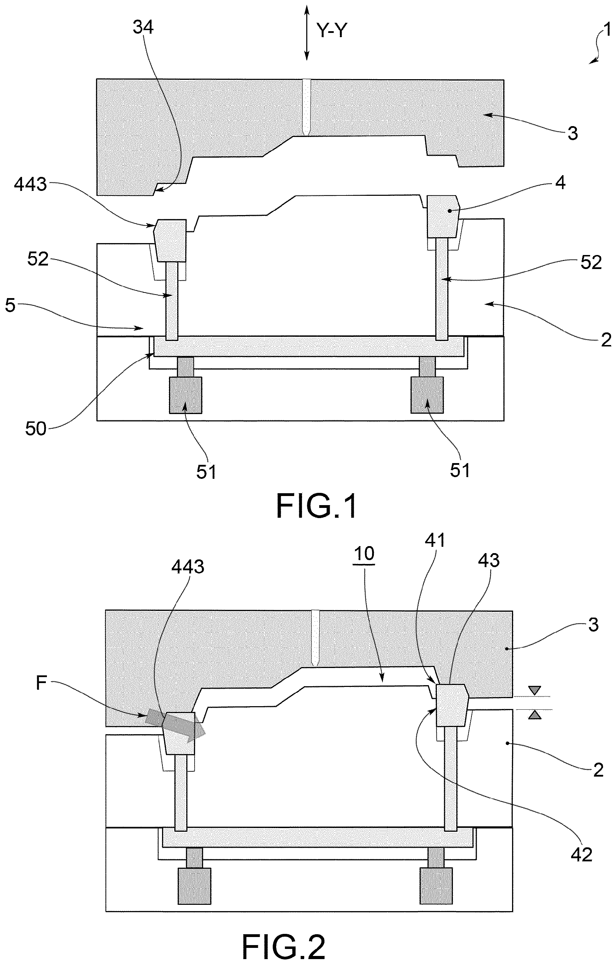

As shown in figure 2, in the closing step of mould 1, matrix 3 pushes on the perimetral ring 4, and in particular on the upper thrust wall 443, thus generating a force F, substantially transversal to the axial direction Y-Y and directed towards the inside of mould 1, which allows correctly retaining the perimetral ring 4, thus ensuring a correct support.

The perimetral ring 4 comprises, between the matrix interface profile 43 and the punch interface profile 42, an inner profile 41 which at least partially defines the profile of the injection chamber 10.

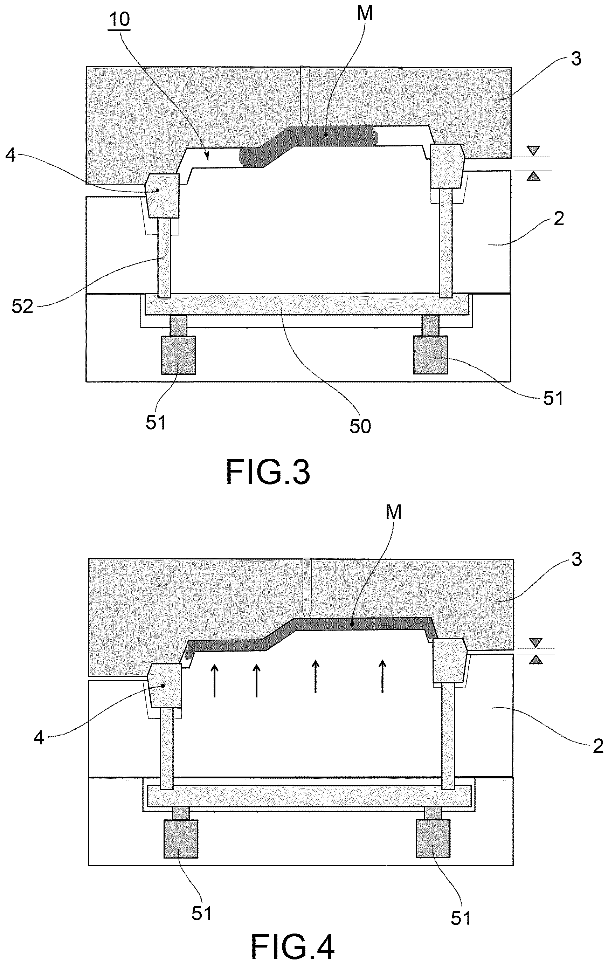

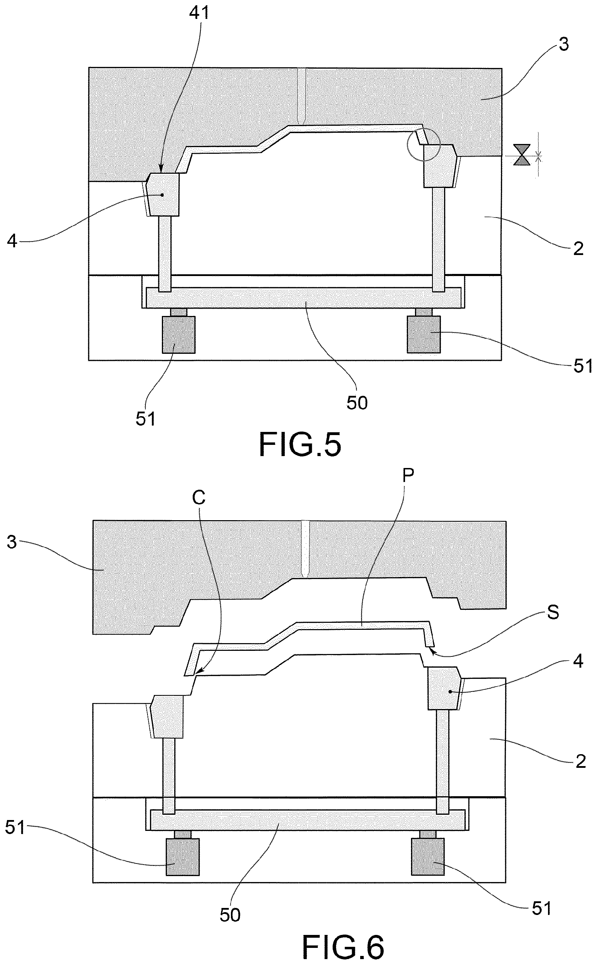

The perimetral ring 4 defines, with the inner profile 41, the profile of the injection chamber 10 in all the moulding process steps, i.e. in the mould closing step (figure 2), in the molten material injection step (figure 3), in the compression step (figure 4) up to the compression end step (figure 5).

The perimetral ring 4 defines a portion of the profile of the injection chamber 10 between matrix 3 and punch 2. Therefore, the perimetral ring 4 defines at least partially the profile of the piece, together with matrix 3 and punch 2.

In particular, the inner profile 41 of the perimetral ring 4 defines at least partially the profile of the piece.

The perimetral ring 4 is interposed between matrix 3 and punch 2: such a solution allows obtaining double junction points on the piece. A double junction point is created in the mould by the coupling of two metal surfaces.

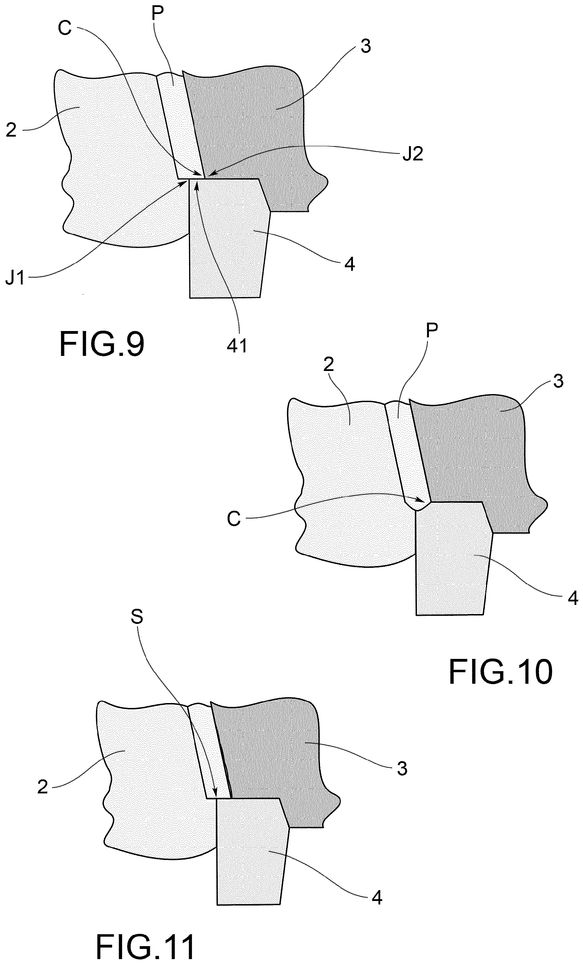

As shown in figure 9, a first double junction point (J1) is formed on the piece between punch 2 and perimetral ring 4, and a second double junction point (J2) between perimetral ring 4 and matrix 3. Such a solution therefore prevents the formation of a triple junction point on the piece (between punch, perimetral ring and matrix 3) of very difficult, if not impossible, execution.

In addition, the fact that at least a portion of the perimetral ring 4 defines the profile of the piece allows producing pieces with rounded edges, as shown in figure 10. This solution is very important for pieces intended to come into contact with the user's skin.

In addition, the fact that at least a portion of the perimetral ring 4 defines the profile of the piece allows to perform an aesthetic photoengraving or embossing treatment (T pattern in bas-relief made in negative on matrix 3), as shown in figure 11. This solution, in which the piece has a wavy surface, is very important for pieces intended for the automotive industry, and in general for pieces intended to have an aesthetic value.

Even more advantageously, the perimetral ring 4 defines at least partially thickness S of piece P, together with punch 2. Such a solution allows effectively hiding the junction points on the piece.

In particular, the inner profile 41 of the perimetral ring 4 defines, together with punch 2, a first double junction point (J1) at thickness S of the piece.

Moreover, the inner profile 41 of the perimetral ring 4 defines, together with matrix 3, a second double junction point (J2) at an outer edge C of the piece.

As shown in figure 9, in fact, the first double junction point (J1) is placed at thickness S of the piece, and the second double junction point (J2) is placed at an outer edge C of the piece. The second double junction point (J2) derives from a flattening closure: it is therefore easy to make with good quality, and without being visible in the finished piece (being placed at an outer edge C of the piece). The first double junction point (J1) is instead by its geometric and technological nature difficult if not impossible to hide. However, the double junction point (J1) is also concealed and not visible to the user as it is placed at thickness S of the piece. Advantageously, therefore, there are no visible junction lines on the piece, which is very important for pieces intended to be aesthetic details.

Mould 1 is also characterised in that the closing of the injection chamber 10 takes place on the perimetral ring 4, a ring that defines together with punch 2 thickness S of the piece, so that the juncion line is placed on the thickness (i.e. within thickness S) of the piece to be moulded.

Mould 1 is operated by axial movement means (not shown) of matrix 3 and/or punch 2 to accomplish the opening and closing of the mould, hereinafter referred to as mould movement means.

Extraction mean 9 (not shown) act on mould 1 adapted to extract the piece from the mould.

Mould 1 is characterised in that the perimetral ring 4 is actuated by means of hydraulic cylinders 51 actuated by a hydraulic circuit 7 capable of controlling the pressure in all process steps. Such a hydraulic circuit 7, which further comprises a valve assembly 71, 73, 72, is integrated into mould 1.

Mould 1 comprises movement means 5 of the perimetral ring 4 adapted to carry out the advancement and retraction of the ring within the mould, hereafter referred to as ring movement means.

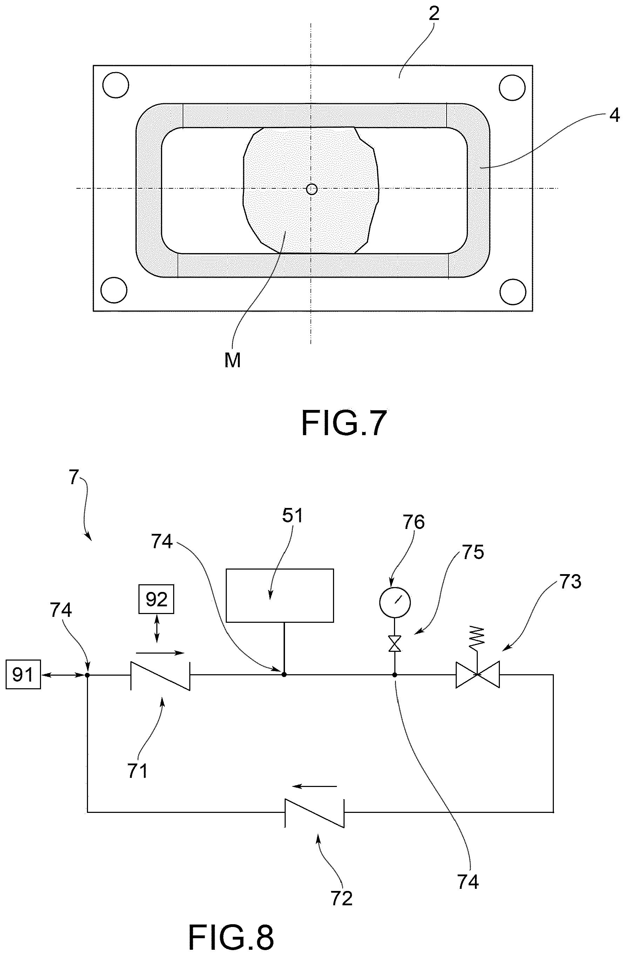

The ring movement means 5 comprise a hydraulic circuit 7 (shown in figure 8) provided with actuating cylinders 51 activated/deactivated by hydraulic controls commonly found in injection presses (and referred to as radial). Usually, and disadvantageously, radials can only be used in standard presses when the mould is open.

In particular, the hydraulic circuit 7 comprises a first hydraulic control 91 (referred to as radial one) and a second hydraulic control 92 (referred to as radial two). The radial or hydraulic control works with the following logic: if the hydraulic control is ON, the pressurised oil provides a constant pressure equal to the set pressure; if the control is OFF, the oil in the hydraulic circuit is free to flow towards a tank at atmospheric pressure. This last step is called 'exhaust pressure'.

The hydraulic circuit 7 for moving ring 5 is thus connected and managed directly by the hydraulic control 91 (or radial one) of the press.

The hydraulic circuit 7 comprises a first non-return valve 71, of the type with release controlled by pressure, directly controlled by radial two 92.

The hydraulic circuit 7 further comprises a pressure relief valve 73, which allows setting the pressures of the circuit and which can be calibrated between zero and the pressure of radial one.

The hydraulic circuit 7 further comprises a second non-return valve 72.

The hydraulic circuit further comprises a pressure gauge 76, to which a valve 75 is associated, for pressure control.

The hydraulic circuit 7 comprises a series of T-unions 74.

The ring movement means 5 comprise a plate 50 which can be lifted by means of the actuating cylinders 51 of the ancillary hydraulic circuit. Plate 50 is provided with axial pins 52 connected to the perimetral ring 4.

Plate 50, also referred to as "table", is inended to ensure the coordination and parallelism of the movement (lifting and retraction) of pins 52 and thus, of the perimetral ring 4.

Plate 50 is provided with a constant preload, provided by the actuating cylinders 51 of the hydraulic circuit 51 by means of the pressure relief valve 73.

Advantageously, the hydraulic circuit 7 is integrated in mould 1 and is connected to the first hydraulic control 91 (referred to as radial one) and to the second hydraulic control 92 (referred to as radial two). This solution allows ensuring both the necessary seal of the closure and the absence of residual forces when opening mould 1, thus avoiding the ejection of the piece at the same time as the opening.

Figures 1 to 7 show the operating diagram of mould 1 and of the perimetral ring 4, moved by the ring movement means 5 and by the hydraulic circuit 7.

Figure 5 shows the the compression step with completely closed mould, i.e. with matrix 3 closed on punch 2. The perimetral ring 4, even if completely retracted due to the thrust of matrix 3, pushes on piece P: the actuating cylinders 51 of hydraulic circuit 7 are active and at constant pressure given by the pressure relief valve 73.

Once the cooling step has been completed, the piece is ready. From this moment, the radial controls (radial one and radial two) of the machine can be used. Radial two is pressurised: acting on the non-return valve 71 it causes the release of pressure of the hydraulic circuit 7: the actuating cylinders 51 drop to zero pressure and the perimetral ring 4 stops pushing on the piece.

Figure 6 shows the opening step of the open mould, i. e. matrix 3 raised with respect to punch 2, and the perimetral ring 4 in the retracted and at rest position (i.e. not in thrust). The actuating cylinders 51, having lost pressure, do not push the piece during the opening step of mould 1 so that it does not fall out before the picking robot arrives. The extraction of the piece is carried out by means of special extractors (not shown), while the pressure in the hydraulic circuit 7 for the movement of the perimetral ring 4 remains at zero until the extraction has taken place.

Figure 1 shows the mould still open but the perimetral ring 4 is now in the advanced position (or in thrust) for a new moulding cycle. Radial one, connected directly to the ring movement circuit 5, is put under pressure and the perimetral ring 4 moves forward. At this point, the pressure in radial one is reset to zero (and it could not be otherwise in a standard press), while in the hydraulic circuit 7, due to the non-return valves 71, 72, pressure remains to the value set in pressure relief valve 73 (which can be calibrated between zero and the pressure of radial one).

In figure 2, mould 1 closes and the perimetral ring 4, pushed forward by the actuating cylinders, 51, retracts under the thrust of matrix 3. The retraction of the perimetral ring 4 reduces the volume of oil in the actuating cylinders 51, and in the hydraulic circuit 7 the constant pressure given by the pressure relief valve 73 remains.

At this point, the injection-compression step begins.

Figure 3 shows the injection step of the molten material into the injection chamber 10.

Figure 4 shows the compression step of the material. Mould 1 resumes closing, squeezing the molten material inside the injection chamber 10. As shown in figure 8, the molten material is pushed towards the edges of the injection chamber 10 when mould 1 is still open, but its travel is stopped by the perimetral ring 4 which is still in abutment between matrix 3 and punch 2 to closure mould 1, due to the force determined by the pressure relief valve 73.

Figure 5 shows the the compression step end in which the mould is completely closed (matrix 3 in abutment on punch 2). At this point the moulded part is cooled, with the mould still closed, and the cycle resumes.

As can be understood from the description, mould 1 according to the invention allows overcoming the drawbacks of the prior art.

Advantageously, the particular geometry of the perimetral ring prevents the pressure of the molten material from pushing the ring itself outwards of the mould, ensuring the proper support of the perimetral ring during the injection of the material into the mould.

Advantageously, moreover, the particular position of the perimetral ring closing the mould prevents the formation of triple junction points, and it effectively hides the junction lines on the piece.

Advantageously, the perfect control of the perimetral ring when opening the mould prevents the ejection of the piece at the same time as the opening of the mould without risk of damage to the piece surface, even with a press of the type commonly available on the market.

## Claims

1. Mould (1) for injection-compression moulding comprising:
- a punch (2) and a matrix (3) suitable to close on the punch (2) so as to delimit with this an injection chamber (10) to contain the material to be injected, said matrix (3) and punch (2) being axially movable between them with respect to an axial direction (Y-Y) of opening/closing of the mould (1),
- a perimetral ring (4), slidingly associated to the punch (2) or the matrix (3), along the axial direction (Y-Y), suitable to define, together with the matrix (3) and the punch (2), the profile of the injection chamber (10) ;
**characterised in that** the perimetral ring (4) comprises an interface profile (43), intended to engage with the matrix (3) or with the punch (2), comprising an upper thrust wall (443), inclined, on which there engages an inclined plane (34) associated to the matrix (3), so as to generate, in the closing phase of the mould (1), a force (F) substantially transverse with respect to the axial direction (Y-Y) and with a direction towards the inside of the mould (1).

2. Mould (1), according to claim 1, wherein the interface profile (43) is convex, preferably convex polygonal.

3. Mould (1), according to any of the preceding claims, wherein, in the step of closing the mould, the perimetral ring (4) is interposed between the matrix (3) and the punch (2), in this way realising double junction points on the piece.

4. Mould (1), according to claim 3, wherein the perimetral ring (4) defines, together with the punch (2), a double junction point (J1) in correspondence of a thickness (S) of the piece.

5. Mould (1), according to claim 3 or 4, wherein the perimetral ring (4) defines, together with the matrix (3), a double junction point (J2) in correspondence of an outer edge (C) of the piece.

6. Mould (1), according to any of the preceding claims, wherein the perimetral ring (4) defines, together with the matrix (3) and the punch (2), the profile of the moulded piece.

7. Mould (1), according to claim 6, wherein the perimetral ring (4) defines, together with the punch (2), a thickness (S) of the piece in such a way as to effectively hide the junction lines on the piece.

8. Mould (1), accordance to any of the preceding claims, comprising an integrated hydraulic circuit (7) for the advancement and retraction of the perimetral ring (4).

9. Mould (1), according to claim 8, wherein the hydraulic circuit (7) comprises hydraulic cylinders (51) activated/deactivated by at least one first hydraulic control (91) and at least one non-return valve (71,72).

10. Mould (1), according to claim 8 or 9, wherein the hydraulic circuit (7) comprises at least one first non-return valve (71) directly controlled by a second hydraulic control (92) and a second non-return valve (72) .

11. Mould (1), according to any of claims 8 to 10, wherein the hydraulic circuit (7) comprises a pressure relief valve (73) that allows setting the pressures of the circuit between zero and the pressure of the radial one.

12. Mould (1), according to any of claims 8 to 11, wherein the hydraulic circuit (7) comprises a pressure gauge (76) for controlling the pressure.

13. Method of closing of a mould (1), according to any of claims 8 to 12, comprising the step of:
- opening the mould with perimetral ring (4) in the advanced position and in thrust:
switching on (ON) a first hydraulic control (91), connected directly to the hydraulic circuit (7) that is put under pressure and determines the advancement of the perimetral ring (4);
switching off (OFF) the first hydraulic control (91), in which the pressure is returned to zero, while, in the hydraulic circuit (7), due to the non-return valves (71,72), the pressure remains at the value set in the pressure relief valve (73);
- closing the mould with perimetral ring (4) in thrust with a force given by the pressure set with the pressure relief valve (73), wherein the inclined upper thrust wall (443) of the perimetral ring (4) engages with the inclined plane (34) of the matrix (3) so generating a force (F) substantially transverse with respect to the axial direction (Y-Y) and with a direction towards the inside of the mould (1);
- injection of the molten material in the injection chamber (10);
- compression of the material in the injection chamber (10) up to complete closure of the mould;
- cooling of the moulded piece with the mould closed: switching on (ON) a second hydraulic control (92), that is put under pressure and, by acting on the non-return valve (71), determines the release of the pressure of the hydraulic circuit (7), which drops to zero and the perimetral ring (4) stops pushing on the piece;
- opening the mould with perimetral ring (4) in the retracted and rest position (i.e., not in thrust).

14. Method of closing a mould (1), according to claim 13, further comprising the step of:
- extraction of the piece using extraction means, while the pressure in the hydraulic circuit (7) remains at zero until after extraction.

## Patentansprüche

1. Form (1) für Spritz-Kompressionsgießen, umfassend:
- einen Stempel (2) und eine Matrix (3), welche geeignet ist, sich an dem Stempel (2) zu schließen, um so mit diesem eine Injektionskammer (10) zu begrenzen, um das zu injizierende Material zu enthalten, wobei die Matrix (3) und der Stempel (2) axial zwischen einander bezüglich einer axialen Richtung (Y-Y) eines Öffnens/Schließens der Form (1) bewegbar sind,
- einen Umfangsring (4), welcher gleitbar dem Stempel (2) oder der Matrix (3) entlang der axialen Richtung (Y-Y) zugeordnet ist, dazu geeignet, zusammen mit der Matrix (3) und dem Stempel (2) das Profil der Injektionskammer (10) zu definieren;
**dadurch gekennzeichnet, dass** der Umfangsring (4) ein Schnittstellenprofil (43) umfasst, welches dazu vorgesehen ist, mit der Matrix (3) oder mit dem Stempel (2) einzugreifen, umfassend eine geneigte obere Schubwand (443), an welcher eine geneigte Ebene (34) eingreift, welche der Matrix (3) zugeordnet ist, um so in der Schließphase der Form (1) eine Kraft (F) im Wesentlichen transversal bezüglich der axialen Richtung (Y-Y) und mit einer Richtung in Richtung der Innenseite der Form (1) zu erzeugen.

2. Form (1) nach Anspruch 1, wobei das Schnittstellenprofil (43) konvex ist, vorzugsweise konvex polygonal.

3. Form (1) nach einem der vorhergehenden Ansprüche, wobei in dem Schritt des Schließens der Form der Umfangsring (4) zwischen die Matrix (3) und den Stempel (2) eingefügt wird, wobei auf diese Weise doppelte Übergangspunkte an dem Stück geschaffen werden.

4. Form (1) nach Anspruch 3, wobei der Umfangsring (4) zusammen mit dem Stempel (2) einen doppelten Übergangspunkt (J1) in Übereinstimmung mit einer Dicke (S) des Stücks definiert.

5. Form (1) nach Anspruch 3 oder 4, wobei der Umfangsring (4) zusammen mit der Matrix (3) einen doppelten Übergangspunkt (J2) in Übereinstimmung mit einem äußeren Rand (C) des Stücks definiert.

6. Form (1) nach einem der vorhergehenden Ansprüche, wobei der Umfangsring (4) zusammen mit der Matrix (3) und dem Stempel (2) das Profil des gegossenen Stücks definiert.

7. Form (1) nach Anspruch 6, wobei der Umfangsring (4) zusammen mit dem Stempel (2) eine Dicke (S) des Stücks derart definiert, dass effektiv die Übergangslinien an dem Stück versteckt werden.

8. Form (1) nach einem der vorhergehenden Ansprüche, umfassend einen integrierten Hydraulikkreislauf (7) für das Vorschieben und Zurückziehen des Umfangsrings (4).

9. Form (1) nach Anspruch 8, wobei der Hydraulikkreislauf (7) Hydraulikzylinder (51) umfasst, welche durch wenigstens eine erste Hydrauliksteuerung (91) und wenigstens ein Rückschlagventil (71, 72) aktiviert/deaktiviert werden.

10. Form (1) nach Anspruch 8 oder 9, wobei der Hydraulikkreislauf (7) wenigstens ein erstes Rückschlagventil (71), welches direkt von einer zweiten Hydrauliksteuerung (92) gesteuert wird, und ein zweites Rückschlagventil (72) umfasst.

11. Form (1) nach einem der Ansprüche 8 bis 10, wobei der Hydraulikkreislauf (7) ein Druck-Entlastungsventil (73) umfasst, welches ein Einstellen der Drücke des Kreislaufs zwischen Null und dem Druck des Radialen erlaubt.

12. Form (1) nach einem der Ansprüche 8 bis 11, wobei der Hydraulikreislauf (7) ein Druckmesselement (76) zum Regeln des Drucks umfasst.

13. Verfahren zum Schließen einer Form (1) nach einem der Ansprüche 8 bis 12, umfassend den Schritt:
- Öffnen der Form mit dem Umfangsring (4) in der vorgeschobenen Position und in Schub:
Einschalten (ON) einer ersten Hydrauliksteuerung (91), welche direkt mit dem Hydraulikreislauf (7) verbunden ist, welcher unter Druck gesetzt wird und das Vorschieben des Umfangsrings (4) bestimmt;
Ausschalten (AUS) der ersten Hydrauliksteuerung (91), wobei der Druck zu Null zurückgeführt wird, während in dem Hydraulikkreislauf (7) aufgrund der Rückschlagventile (71, 72) der Druck bei dem Wert verbleibt, welcher in dem Druck-Entlastungsventil (73) eingestellt worden ist;
- Schließen der Form mit dem Umfangsring (4) in Schub mit einer Kraft, welche durch den Druck gegeben ist, welcher mit dem Druck-Entlastungsventil (73) eingestellt worden ist, wobei die geneigte obere Schubwand (443) des Umfangsrings (4) mit der geneigten Ebene (34) der Matrix (3) eingreift, so dass eine Kraft (F) im Wesentlichen transversal bezüglich der axialen Richtung (Y-Y) und mit einer Richtung in Richtung der Innenseite der Form (1) erzeugt wird;
- Injizieren des geschmolzenen Materials in die Injektionskammer (10);
- Kompression des Materials in der Injektionskammer (10) bis zu einem vollständigen Schließen der Form;
- Kühlen des gegossenen Stücks mit geschlossener Form:
Einschalten (ON) einer zweiten Hydrauliksteuerung (92), welche unter Druck gesetzt wird und durch Einwirken auf das Rückschlagventil (71) die Entlastung des Drucks des Hydraulikkreislaufs (7) bestimmt, welcher auf Null abfällt, und der Umfangsring (4) hört auf, auf das Stück zu drücken;
- Öffnen der Form mit dem Umfangsring (4) in der zurückgezogenen und Ruheposition (d.h. nicht in Schub).

14. Verfahren eines Schließens einer Form (1) nach Anspruch 13, ferner umfassend den Schritt:
- Entnehmen des Stücks unter Verwendung von Entnahmemitteln während der Druck in dem Hydraulikkreislauf (7) bis nach der Entnahme bei Null verbleibt.

## Revendications

1. Moule (1) de moulage par injection-compression comprenant :
- un poinçon (2) et une matrice (3) appropriée pour se refermer sur le poinçon (2) de façon à délimiter avec celui-ci une chambre d'injection (10) pour contenir le matériau à injecter, ladite matrice (3) et ledit poinçon (2) étant axialement mobiles entre eux par rapport à une direction axiale (Y-Y) d'ouverture/fermeture du moule (1),
- une bague périmétrique (4), associée de manière coulissante au poinçon (2) ou à la matrice (3), le long de la direction axiale (Y-Y), appropriée pour définir, conjointement avec la matrice (3) et le poinçon (2), le profil de la chambre d'injection (10) ;
**caractérisé en ce que** la bague périmétrique (4) comprend un profil d'interface (43), destiné à venir en prise avec la matrice (3) ou avec le poinçon (2), comprenant une paroi de poussée supérieure (443), inclinée, sur laquelle vient en prise un plan incliné (34) associé à la matrice (3), de façon à générer, dans la phase de fermeture du moule (1), une force (F) sensiblement transversale par rapport à la direction axiale (Y-Y) et ayant une direction orientée vers l'intérieur du moule (1).

2. Moule (1), selon la revendication 1, dans lequel le profil d'interface (43) est convexe, de préférence polygonal convexe.

3. Moule (1), selon l'une quelconque des revendications précédentes, dans lequel, dans l'étape de fermeture du moule, la bague périmétrique (4) est interposée entre la matrice (3) et le poinçon (2), réalisant de cette manière des points de jonction doubles sur la pièce.

4. Moule (1), selon la revendication 3, dans lequel la bague périmétrique (4) définit, conjointement avec le poinçon (2), un point de jonction double (J1) en correspondance avec une épaisseur (S) de la pièce.

5. Moule (1), selon la revendication 3 ou 4, dans lequel la bague périmétrique (4) définit, conjointement avec la matrice (3), un point de jonction double (J2) en correspondance avec un bord externe (C) de la pièce.

6. Moule (1), selon l'une quelconque des revendications précédentes, dans lequel la bague périmétrique (4) définit, conjointement avec la matrice (3) et le poinçon (2), le profil de la pièce moulée.

7. Moule (1), selon la revendication 6, dans lequel la bague périmétrique (4) définit, conjointement avec le poinçon (2), une épaisseur (S) de la pièce d'une manière permettant de masquer efficacement les lignes de jonction sur la pièce.

8. Moule (1), selon l'une quelconque des revendications précédentes, comprenant un circuit hydraulique intégré (7) pour l'avancement et le retrait de la bague périmétrique (4).

9. Moule (1), selon la revendication 8, dans lequel le circuit hydraulique (7) comprend des vérins hydrauliques (51) activés/désactivés par au moins une première commande hydraulique (91) et au moins un clapet anti-retour (71, 72).

10. Moule (1), selon la revendication 8 ou 9, dans lequel le circuit hydraulique (7) comprend au moins un premier clapet anti-retour (71) directement commandé par une seconde commande hydraulique (92) et un second clapet anti-retour (72).

11. Moule (1), selon l'une quelconque des revendications 8 à 10, dans lequel le circuit hydraulique (7) comprend une soupape de décompression (73) qui permet de régler les pressions du circuit entre zéro et la pression du radial un.

12. Moule (1), selon l'une quelconque des revendications 8 à 11, dans lequel le circuit hydraulique (7) comprend un manomètre (76) pour contrôler la pression.

13. Procédé de fermeture d'un moule (1), selon l'une quelconque des revendications 8 à 12, comprenant les étapes de :
- l'ouverture du moule avec la bague périmétrique (4) dans la position avancée et en poussée :
la mise en marche (ON) d'une première commande hydraulique (91), directement reliée au circuit hydraulique (7) qui est mise sous pression et détermine l'avancement de la bague périmétrique (4) ;
l'arrêt (OFF) de la première commande hydraulique (91), dans laquelle la pression est ramenée à zéro, tandis que, dans le circuit hydraulique (7), à cause des clapets anti-retour (71, 72), la pression reste à la valeur réglée dans la soupape de décompression (73) ;
- la fermeture du moule avec la bague périmétrique (4) en poussée avec une force donnée par la pression réglée avec la soupape de décompression (73), dans lequel la paroi de poussée supérieure inclinée (443) de la bague périmétrique (4) vient en prise avec le plan incliné (34) de la matrice (3) en générant ainsi une force (F) sensiblement transversale par rapport à la direction axiale (Y-Y) et ayant une direction orientée vers l'intérieur du moule (1) ;
- l'injection du matériau fondu dans la chambre d'injection (10) ;
- la compression du matériau dans la chambre d'injection (10) jusqu'à la fermeture complète du moule ;
- le refroidissement de la pièce moulée avec le moule fermé :
la mise en marche (ON) d'une seconde commande hydraulique (92), qui est mise sous pression et, par une action sur le clapet anti-retour (71), détermine la décompression du circuit hydraulique (7), qui retombe à zéro et la bague périmétrique (4) cesse de pousser sur la pièce ;
l'ouverture du moule avec la bague périmétrique (4) dans la position rétractée et de repos (c'est-à-dire, non en poussée).

14. Procédé de fermeture d'un moule (1), selon la revendication 13, comprenant en outre l'étape de :
- l'extraction de la pièce à l'aide de moyens d'extraction, tandis que la pression dans le circuit hydraulique (7) reste à zéro jusqu'après l'extraction.
